# EUROPÄISCHE PATENTSCHRIFT

(11) **EP 2 888 100 B1**
(45) Veröffentlichungstag und Bekanntmachung des Hinweises auf die Patenterteilung: **02.10.2019**
(21) Anmeldenummer: 13753089.5
(22) Anmeldetag: 13.08.2013
(51) Int. Cl.: B29C 70/54, B29C 70/44, B29C 33/00

(54) **FERTIGUNGSVERFAHREN, FERTIGUNGSFORM UND VERWENDUNG**
MANUFACTURING METHOD, MANUFACTURING MOLD AND USE
PROCÉDÉ DE FABRICATION, MOULE DE FABRICATION ET UTILISATION

(30) Priorität: 27.08.2012 DE 102012215189
(43) Veröffentlichungstag der Anmeldung: 01.07.2015
(73) Patentinhaber: Senvion GmbH, 22297 Hamburg (DE)
(72) Erfinder: EYB, Enno, 24116 Kiel (DE)
(74) Vertreter: Wallinger Ricker Schlotter Tostmann
(86) Internationale Anmeldenummer: PCT/EP2013/002423
(87) Internationale Veröffentlichungsnummer: WO 2014/032769

(56) Entgegenhaltungen:
- US-A- 4 942 013
- US-A1- 2008 044 506

## Beschreibung

Die Erfindung betrifft Verfahren zum Fertigen eines Faserverbundbauteils, insbesondere eines Faserverbundbauteils für ein Rotorblatt einer Windenergieanlage. Die Erfindung betrifft des Weiteren eine Fertigungsform zur Fertigung eines Faserverbundbauteils, insbesondere eines Faserverbundbauteils für ein Rotorblatt einer Windenergieanlage. Die Erfindung betrifft ferner die Verwendung einer Fertigungsform zur Fertigung eines eine Längserstreckung aufweisenden Faserverbundbauteils.

Rotorblätter moderner Windenergieanlagen umfassen in der Regel mehrere, miteinander verbundene Bauteile, die einzeln in Faserverbundbauweise gefertigt werden. Die einzelnen Bauteile sind typischerweise flächig mit Längen von bis zu einigen zehn Metern, Breiten von bis zu mehreren Metern sowie im Vergleich dazu geringen Dicken. Dabei sind die Bauteile üblicherweise nicht eben, sondern weisen aus Gründen der Stabilität und/oder der Aerodynamik komplexe zweidimensionale Formen auf. Oftmals variiert aus denselben Gründen auch die Dicke über die Fläche des Bauteils.

Bei der Fertigung derartiger Bauteile hat sich die sogenannte Vakuuminfusion bewährt. Dabei wird Faserhalbzeug, wie Fasermatten, Fasergelege etc., in einer offenen Formvorrichtung ausgelegt, die die dreidimensionale Form des zu fertigenden Bauteils vorgibt. Die Formvorrichtung mit dem Faserhalbzeug wird dann, beispielsweise mittels Vakuumfolie, abgedichtet und unter Vakuum beziehungsweise Unterdruck gesetzt. Über Schläuche oder Kanäle wird flüssiges Harz zugeführt, das unter Einwirkung des Unterdrucks in die Form fließt und das Faserhalbzeug durchtränkt. Nach Aushärten des Harzes wird dann das entsprechende Bauteil bereitgestellt.

Problematisch sind dabei Fehltränkungen wie beispielsweise Harzansammlungen oder Lufteinschlüsse, weil dadurch Haltbarkeit und Belastbarkeit des fertigen Bauteils empfindlich beeinträchtigt werden. Fehltränkungen können beispielsweise dadurch entstehen, dass unterschiedlich dicke Bereiche des Faserhalbzeugs unterschiedlich schnell mit Harz durchtränkt werden.

Aus US 4,942,013 geht eine Vorrichtung zum Infusionieren eines Fasermaterials hervor, bei der das Fasermaterial auf einer Andruckplatte positioniert und anschließend in einem Vakuuminfusionsverfahren mit Harz getränkt wird. In der Andruckplatte befinden sich auf einer dem Fasermaterial abgewandten Unterseite Kanäle, welche eine Vielzahl von Durchtrittsöffnungen miteinander verbinden. In das Kanalsystem wird das Harz eingegeben, dieses verteilt sich im Kanalsystem und durchtritt die Durchtrittsöffnungen in Richtung des Fasermaterials, so dass dieses mit Harz getränkt wird. Um unterschiedlich dickes Fasermaterial mit Harz zu imprägnieren, wird vorgeschlagen, die auf der Unterseite der Andruckplatte vorhandenen Kanäle ihrer Größe nach zu verändern.

In US 2008/0044506 A1 ist eine Vorrichtung zur Herstellung von Faserverbundkomponenten offenbart, bei der Fasermaterial auf einer Platte positioniert wird und mit Hilfe eines Vakuuminvasionsverfahrens mit Harz durchtränkt wird. Die Oberfläche der Platte umfasst eine Reihe von Einlaufspuren zur besseren Leitung des Harzes.

Ausgehend von diesem Stand der Technik liegt der vorliegenden Erfindung die Aufgabe zugrunde, Haltbarkeit und Belastbarkeit eines Bauteils in Faserverbundbauweise für ein Rotorblatt einer Windenergieanlage mit variierender Dicke zu verbessern und insbesondere die Fertigung eines derartigen Bauteils mittels Vakuuminfusion entsprechend zu verbessern.

Diese Aufgabe wird gelöst durch ein Verfahren nach Anspruch 1 zum Fertigen eines Faserverbundbauteils.

Durch die Erfindung wird erreicht, dass zwei Bereichen des Fasermaterials, die jeweils unterschiedliche Dicke aufweisen, das Matrixmaterial mit jeweils unterschiedlicher Matrixmaterialflussrate zugeführt oder bereitgestellt wird. Hierdurch wird eine gleichmäßige Tränkung des Fasermaterials auch bei unterschiedlichen Dicken erreicht. Insbesondere können auch mehr als zwei Bereiche und mehr als zwei Matrixmaterialflussraten vorgesehen sein, wobei die Matrixmaterialflussraten insbesondere an die Dicke des Fasermaterials angepasst sein können.

Unter Matrixmaterial werden im Rahmen der Erfindung insbesondere fließfähige Natur- oder Kunstharze verstanden, die unter Luft-, Wärme- und/oder Lichteinwirkung, inklusive Einwirkung von UV-Licht, aushärten. Fasermaterial bezeichnet insbesondere Glasfaserhalbzeug, Kohlefaserhalbzeug oder Kunststofffaserhalbzeug in Form von Fasermatten, Geweben, Vlies oder Endlosfasern. Das Fasermaterial wird insbesondere schichtweise in die Fertigungsform eingebracht oder ausgelegt, wobei zwischen den Schichten des Fasermaterials Füllmaterialien wie Balsaholz vorgesehen sein können.

Erfindungsgemäß wird das Fasermaterial mit fließfähigem Matrixmaterial getränkt, das sich mit den Fasern des Fasermaterials zu einem dauerhaften Faserverbundwerkstoff verbindet, wobei in dem Faserverbundwerkstoff die Fasern des Fasermaterials in einer Matrix aus ausgehärtetem Matrixmaterial eingebettet sind.

Vorzugsweise werden zur Vorgabe einer Matrixmaterialflussrate alle Schichten berücksichtigt, die mit Matrixmaterial tränkbar sind. Eine Dicke des Fasermaterials, in deren Abhängigkeit die Matrixmaterialflussrate vorgegeben ist oder wird, ist beispielsweise die Gesamtdicke des Fasermaterials oder die Gesamtdicke des Fasermaterials und des Füllmaterials in einem Bereich. Auch die über einen Bereich gemittelte Dicke des Fasermaterials und/oder des Füllmaterials ist eine geeignete Dicke des Fasermaterials, in deren Abhängigkeit die Matrixmaterialflussrate vorgegeben sein oder werden kann.

In diesem Zusammenhang wird unter Matrixmaterialflussrate insbesondere eine Menge an Matrixmaterial verstanden, die pro Zeiteinheit und pro Längeneinheit über den entsprechenden Abschnitt des Angusskanals zum Tränken des Fasermaterials zugeführt oder bereitgestellt wird.

Wenn insbesondere bei einer geringeren Dicke des Fasermaterials eine geringere Matrixmaterialflussrate und bei einer höheren Dicke des Fasermaterials eine höhere Matrixmaterialflussrate vorgegeben wird, wird vorteilhafterweise eine gleichmäßigere Ausbreitung des Matrixmaterials im gesamten Fasermaterial erreicht. Insbesondere wird hierdurch eine Abhängigkeit der Fließgeschwindigkeit des Matrixmaterials im Fasermaterial von der Dicke des Fasermaterials vorteilhafterweise beeinflusst.

Bei einer bevorzugten Ausgestaltung des erfindungsgemäßen Verfahrens ist vorgesehen, dass die erste Matrixmaterialflussrate durch eine erste Querschnittsfläche am oder im ersten Abschnitt des Angusskanals vorgegeben ist oder wird und/oder dass die zweite Matrixmaterialflussrate durch eine zweite Querschnittsfläche am oder im zweiten Abschnitt des Angusskanals vorgegeben ist oder wird.

In Rahmen der Erfindung wird unter einer Querschnittsfläche insbesondere die Gestalt und/oder Größe eines Matrixmaterialvolumenstroms in oder zu einem Abschnitt des Angusskanals in einer Ebene quer zu einer Ausbreitungsrichtung des Matrixmaterialvolumenstroms verstanden. Beispielswiese sind der Querschnitt des Angusskanals an einem gegebenen Punkt entlang seiner Längserstreckung oder die lichte Durchtrittsfläche eines Zulaufs für Matrixmaterial von einem Matrixmaterialvorrat zu einem Abschnitt des Angusskanals Querschnittsflächen im Sinne der Erfindung.

Die der Erfindung zugrundeliegende Aufgabe wird des Weiteren gelöst durch eine Fertigungsform nach Anspruch 4 zur Fertigung eines Faserverbundbauteils.

Vorzugsweise ist die erste Querschnittsfläche an die Dicke des Fasermaterials im ersten Bereich angepasst und die zweite Querschnittsfläche an die Dicke des Fasermaterials im zweiten Bereich angepasst. Hierdurch wird auf einfache Weise eine an die Dicke des Fasermaterials angepasste Matrixmaterialflussrate in den verschiedenen Bereichen erzielt.

Die erfindungsgemäße Fertigungsform ist insbesondere geeignet für die Verwendung bei dem zuvor beschriebenen erfindungsgemäßen Verfahren zum Fertigen eines Faserverbundbauteils.

Die Erfindung umfasst auch Ausführungsformen, bei denen der Angusskanal mehr als zwei Abschnitte mit jeweils einer entsprechenden Querschnittsfläche aufweist, wobei die Anzahl der Abschnitte sowie die Ausgestaltung deren Querschnittsflächen vorgegeben werden kann und insbesondere an die Anzahl von Faserlagen mit verschiedenen Dicken angepasst sein kann.

Abhängig von der Ausgestaltung des zu fertigenden Faserverbundbauteils ist es im Einzelfall vorteilhaft, wenn der Angusskanal wenigstens abschnittsweise entlang seiner Längserstreckung eine im Wesentlichen kontinuierlich variierende Querschnittsfläche aufweist. Dies entspräche einem Angusskanal mit beliebig vielen beliebig kurzen Abschnitten und ist insbesondere vorteilhaft, wenn eine entlang der Längserstreckung kontinuierlich oder im Wesentlichen kontinuierlich variierende Matrixmaterialflussrate vorgegeben werden soll.

Eine besonders bevorzugte Ausführungsform der erfindungsgemäßen Fertigungsform ist dadurch gekennzeichnet, dass der Angusskanal wenigstens abschnittsweise mit einer variablen Querschnittsfläche ausgebildet ist.

Eine variable Querschnittsfläche ist in diesem Zusammenhang insbesondere eine Querschnittsfläche, die reversibel und zerstörungsfrei veränderlich ausgebildet ist.

Hierdurch ergibt sich insbesondere der Vorteil, dass die Querschnittsfläche des Angusskanals bzw. die Querschnittsfläche wenigstens eines Abschnitts des Angusskanals und somit die durch die Querschnittsfläche vorgegebene Matrixmaterialflussrate schnell und problemlos optimiert oder an geänderte Anforderungen angepasst werden kann. Insbesondere ist die Fertigungsform selbst, die in der Regel aufwendig herzustellen und entsprechend kostspielig ist, weiterhin verwendbar.

Erfindungsgemäß umfasst die Fertigungsform einen Formkörper mit einem Kanal, wobei der Kanal wenigstens abschnittsweise mittels eines zu dem Kanal formkomplementären Einlegestücks als Angusskanal ausgebildet ist. Erfindungsgemäß ist ein Einlegestück für einen Kanal eines Formkörpers angegeben, der einen Ausgusskanal ausgebildet hat und auf der gegenüberliegenden Seite zum Ausgusskanal formkomplementär zu dem Kanal ausgebildet ist, wobei der Ausgusskanal einen ersten Abschnitt mit einer ersten Querschnittsfläche und einen zweiten Abschnitt mit einer zweiten Querschnittsfläche aufweist.

Hierdurch wird erreicht, dass der Angusskanal schnell, einfach und kostengünstig, durch Austausch des Einlegestücks, angepasst und optimiert werden kann. Auch erlauben derartige Einlegestücke eine Nachrüstung der erfindungsgemäßen Fertigungsform bei vorhandenen Fertigungsformen mit einem Kanal.

Die der Erfindung zugrundeliegende Aufgabe wird ferner gelöst durch die Verwendung einer erfindungsgemäßen Fertigungsform zur Fertigung eines eine Längserstreckung aufweisenden Faserverbundbauteils, wobei das gefertigte Faserverbundbauteil entlang seiner Längserstreckung wenigstens einen ersten Bereich mit einer ersten Dicke und einen zweiten Bereich mit einer zweiten Dicke aufweist.

Vorteilhafterweise wird hierfür eine Fertigungsform verwendet, bei der die Längserstreckung des Angusskanals im Wesentlichen parallel zu der Längserstreckung des in der Fertigungsform zu fertigenden Faserverbundbauteils angeordnet ist.

Besonders bevorzugt wird eine Fertigungsform verwendet, bei der der erste Abschnitt des Angusskanals in der Nähe des ersten Bereichs des in der Fertigungsform zu fertigenden Faserverbundbauteils und der zweite Abschnitt des Angusskanals in der Nähe des zweiten Bereichs des in der Fertigungsform zu fertigenden Faserverbundbauteils angeordnet ist.

Die erste Querschnittsfläche hat eine andere Größe als die zweite Querschnittsfläche.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmaie oder eine Kombination mehrerer Merkmale erfüllen.

Die Erfindung wird nachstehend anhand von Ausführungsbeispielen unter Bezugnahme auf die Zeichnungen beschrieben.

Es zeigen:
- Fig. 1: schematisch eine Seitendarstellung einer Fertigungsform mit Fasermaterial für ein Faserverbundbauteil;

- Fig. 2: schematisch eine Draufsicht der Fertigungsform aus Fig. 1;
- Fig. 3a: schematisch eine Schnittdarstellungen entlang der Linie A-A in Fig. 2;
- Fig. 3b: schematisch eine Schnittdarstellungen entlang der Linie B-B in Fig. 2;
- Fig. 3c: schematisch eine Schnittdarstellungen entlang der Linie C-C in Fig. 2;
- Fig. 4a-c: schematische Schnittdarstellungen entsprechend den Darstellungen in Fig. 3a-c für eine erfindungsgemäße Fertigungsform;
- Fig. 5: schematisch eine weitere Ausführungsform einer erfindungsgemäßen Fertigungsform.

In den Zeichnungen sind jeweils gleiche oder gleichartige Elemente und/oder Teile mit denselben Bezugsziffern versehen, so dass von einer erneuten Vorstellung jeweils abgesehen wird.

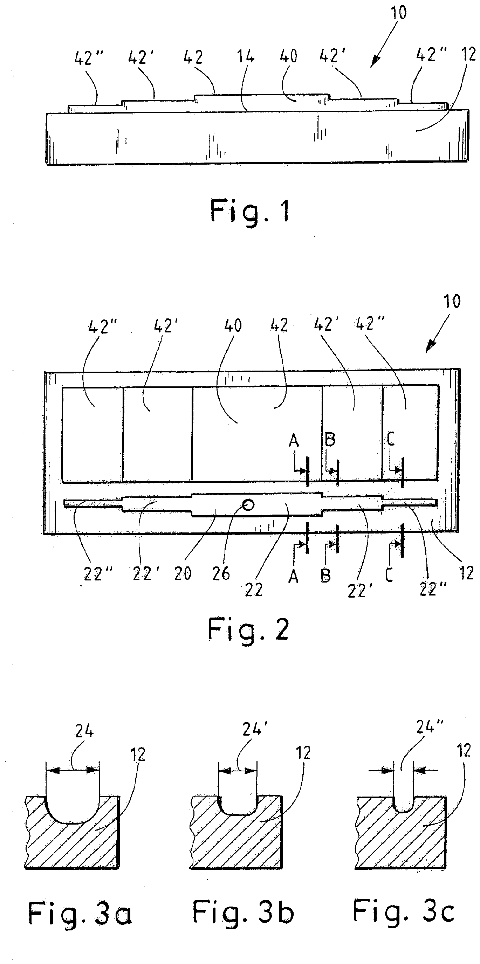

Fig. 1 zeigt schematisch eine Seitenansicht einer
Fertigungsform 10 für ein Faserverbundbauteil. Es handelt sich um eine offene Fertigungsform 10 mit einem Formkörper 12. Der Formkörper 12 weist an seiner Oberseite eine Formfläche 14 auf, die Form und Oberflächenbeschaffenheit einer Seite des zu fertigenden Faserverbundbauteils vorgibt.

In die Fertigungsform 10 bzw. auf die Formfläche 14 ist Fasermaterial 40 für das zu fertigende Faserverbundbauteil eingelegt bzw. aufgelegt. Entsprechend den gewünschten Eigenschaften des zu fertigenden Faserverbundbauteils ist das Fasermaterial unterschiedlich dick ausgelegt. In dem schematisch dargestellten Beispiel ist ein mittlerer Bereich 42 mit größter Dicke vorgesehen, an den sich zu beiden Seiten jeweils ein Bereich 42' mittlerer Dicke und an jeden Bereich 42' mittlerer Dicke jeweils ein Bereich 42" geringster Dicke anschließen. Die unterschiedliche Dicke der verschiedenen Bereiche 42, 42', 42" ergibt sich beispielsweise durch eine unterschiedliche Anzahl von Lagen an Faserhalbzeug und/oder Füllmaterial.

Eine Draufsicht der offenen Fertigungsform 10 mit dem eingelegten bzw. aufgelegten Fasermaterial 40 aus Fig. 1 ist in Fig. 2 dargestellt.

Das Fasermaterial 40 weist entsprechend dem zu fertigenden Faserverbundbauteil eine zweidimensionale Kontur mit einer Längserstreckung und einer Quererstreckung auf. Im gezeigten Beispiel entspricht die Längserstreckung der längeren Seite und die Quererstreckung der kürzeren Seite der in Fig. 2 schematisch dargestellten rechteckigen Kontur des Fasermaterials 40.

Entlang der Längserstreckung weist das Fasermaterial 40 die zuvor dargestellten Bereiche 42, 42', 42" unterschiedlicher Dicke auf, während die Dicke des Fasermaterials 40 quer dazu, d.h. in Richtung der Quererstreckung, im Wesentlichen konstant bleibt.

Das Fasermaterial 40 in der Fertigungsform 10 bzw. auf der Formfläche 14 wird zum Fertigen des Faserverbundbauteils mit fließfähigem Harz getränkt. Die Fertigungsform 10 weist hierfür einen Angusskanal 20 mit einem Zulaufanschluss 26 für Harz aus einem nicht dargestellten Harzvorrat auf. Der Angusskanal 20 weist eine Längserstreckung auf, die im Wesentlichen parallel zur Längserstreckung des zu fertigenden Faserverbundbauteils bzw. zur Längserstreckung des Fasermaterials 40 in der Fertigungsform 10 ausgerichtet ist.

Für das Tränken des Fasermaterials 40 mit dem Harz wird beispielsweise ein Vakuuminfusionsverfahren eingesetzt. Dabei wird das Fasermaterial 40 in der Fertigungsform 10 mit einer nicht dargestellten Vakuumfolie abgedeckt, die gegenüber dem Formkörper 12 der Fertigungsform 10 abgedichtet ist oder wird. Die Luft in dem so entstandenen luftdicht abgeschlossenen Hohlraum zwischen Vakuumfolie und Fertigungsform 10 bzw. Formkörper 12 wird anschließend abgepumpt. Unter dem so entstandenen Unterdruck oder Vakuum gelangt Harz aus dem Harzvorrat über den Zufluss 26 in den Angusskanal 20, verteilt sich entlang der Längserstreckung des Angusskanals 20 und fließt aus dem Angusskanal 20 in das Fasermaterial 40. Dabei bildet sich in dem Fasermaterial 40 eine Harzfließfront, die im Wesentlichen quer zur Längserstreckung des Angusskanals 20 fortschreitet.

Der Angusskanal 20 weist dabei mehrere Abschnitte 22, 22', 22" auf, wobei das Harz für einen Abschnitt 42, 42', 42" des Fasermaterials 40 im Wesentlichen aus einem der Abschnitte 22, 22', 22" des Angusskanals 20 in das Fasermaterial 40 fließt. Harz für den mittleren Bereich 42 des Fasermaterials wird entsprechend hauptsächlich im mittleren Abschnitt 22 des Angusskanals 20 bereitgestellt, Harz für die äußeren Bereiche 42" des Fasermaterials wird hauptsächlich über die beiden äußeren Abschnitte 22" des Angusskanals 20 bereitgestellt, und Harz für die dazwischenliegenden Bereiche 42' des Fasermaterials 40 wird hauptsächlich über die Abschnitte 22' des Angusskanals 20 bereitgestellt.

Die Abschnitte 22, 22', 22" des Angusskanals weisen jeweils einen unterschiedlichen Kanalquerschnitt 24, 24', 24" auf, wie in den Fig. 3a, 3b und 3c dargestellt ist.

In der Mitte des Angusskanals 20, d.h. im Abschnitt 22, ist der Kanalquerschnitt 24 relativ zu den Kanalquerschnitten 24', 24" in den anderen Abschnitten 22', 22" am größten. Dadurch gelangt Harz aus dem mitteleren Abschnitt 22 des Angusskanals 20 ungehindert in den mittleren Bereich 42 des Fasermaterials, fließt dort jedoch, insbesondere aufgrund der im Vergleich zu den anderen Bereichen 42', 42" großen Dicke des Fasermaterials 40, nur relativ langsam.

In den Bereichen 42' würde das Harz hingegen schneller fließen, weil insbesondere die Dicke des Fasermaterials 40 in den Bereichen 42' geringer ist als im Bereich 42. Um ein unterschiedlich schnelles Fortschreiten der Harzfließfront im Bereich 42 und den angrenzenden Bereichen 42' zu vermeiden, weist der Angusskanal 20 in den Abschnitten 22' einen geringeren Kanalquerschnitt 24' auf als der Kanalquerschnitt 24 im Abschnitt 22. Entsprechend ist auch der Kanalquerschnitt 24" der äußeren Abschnitte 22" des Angusskanals 20, über die Harz für die Bereiche 42" des Fasermaterials 40 mit geringster Dicke bereitgestellt wird, gegenüber dem Kanalquerschnitt 24' der Abschnitte 22' reduziert.

Dadurch wird erreicht, dass das aus den Abschnitten 22, 22' und 22" des Angusskanals 20 in die Bereiche 42, 42', 42" des Fasermaterials 40 fließende Harz mengenmäßig begrenzt wird, so dass insbesondere unabhängig von der Dicke des Fasermaterials 40 in den verschiedenen Bereichen 42, 42', 42" eine über die gesamte Längserstreckung des Fasermaterials 40 mit gleichmäßiger Fließgeschwindigkeit fortschreitende Harzfließfront ausgebildet wird.

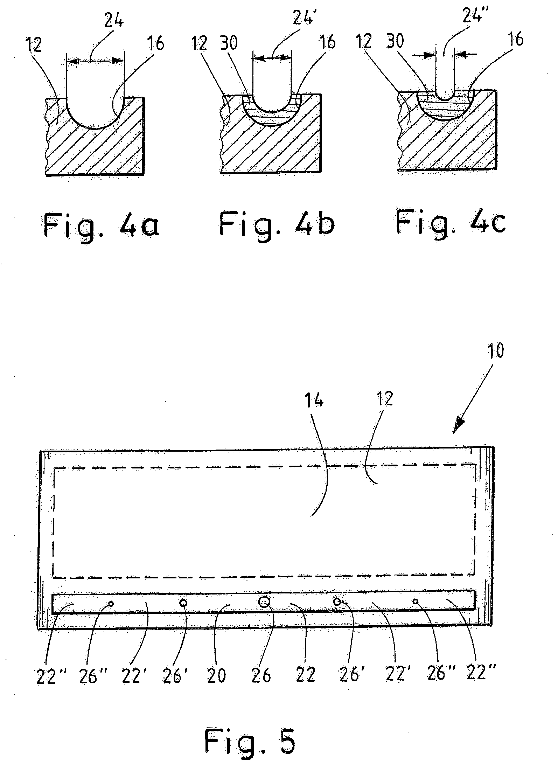

Eine alternative Ausgestaltung zu dem Angusskanal 20 gemäß den Fig. 3a, 3b und 3c mit den Abschnitten 22, 22', 22", die jeweils einen anderen Kanalquerschnitt 24, 24', 24" aufweisen, ist in den Fig. 4a, 4b und 4c gezeigt.

Dabei ist zunächst vorgesehen, dass der Formkörper einen Kanal 16 aufweist, der entlang seiner Längserstreckung einen im Wesentlichen konstanten Querschnitt aufweist. Im Abschnitt 22, dargestellt in Fig. 4a, wird der Angusskanal 20 durch den entsprechenden Abschnitt des Kanals 16 mit dem Kanalquerschnitt 24 gebildet.

In den Abschnitten 22', dargestellt in Fig. 4b, befindet sich jeweils ein Einlegestück 30 in dem Kanal 16, das an der Unterseite formkomplementär zu dem Querschnitt des Kanals 16 ausgebildet ist und den Kanal 16 teilweise verschließt. An der Oberseite des Einlegeteils 30 ist ein Kanalquerschnitt 24' für einen Abschnitt 22' des Angusskanals 20 ausgebildet.

In den Abschnitten 22" befindet sich ein entsprechendes Einlegestück für den Angusskanal 20 mit dem Kanalquerschnitt 24".

Denkbar ist auch, dass ein einziges Einlegestück 30 den Angusskanal 20 mit allen benötigten Abschnitten 22, 22', 22" bereitstellt.

Der Vorteil eines mit Einlegestücken 30 ausgebildeten Angusskanals 20 liegt darin, dass eine schnelle, einfache und kostengünstige Änderung der Kanalquerschnitte 24, 24', 24" in den verschiedenen Abschnitten 22, 22', 22" des Angusskanals erfolgen kann. Dadurch wird eine flexible Anpassung und Optimierung bei der Fertigung von Faserverbundbauteilen ermöglicht. Außerdem ermöglichen die beschriebenen Einlegestücke 30 die Nachrüstung bei vorhandenen Fertigungsformen 10 mit einem Kanal 16.

Die Erfindung ist ungeachtet des gezeigten Beispiels nicht auf rechteckige, ebene Faserverbundbauteile mit deutlich abgestufter Dicke begrenzt. Auch Faserverbundbauteile mit gewölbter Form und komplexer Kontur sind ohne weiteres gemäß dem erfindungsgemäßen Verfahren oder unter Verwendung einer entsprechend angepassten erfindungsgemäßen Fertigungsform 10 fertigbar.

Fig. 5 zeigt eine weitere erfindungsgemäße Fertigungsform 10. Auch diese Ausführung der Erfindung sieht einen Formkörper 12 mit einer Formfläche 14 und einem Angusskanal 20 vor.

Der Angusskanal 20 verfügt über mehrere Harzzuläufe bzw. Zulaufanschlüsse 26, 26', 26", die jeweils einen Abschnitt 22, 22', 22" des Angusskanals 20 mit Harz aus einem nicht dargestellten Harzvorrat versorgen. Durch geeignete Maßnahmen wie beispielsweise angepasste Zulaufquerschnitte oder Ventile ist ebenfalls die erfindungsgemäße Anpassung der in den einzelnen Abschnitt 22, 22', 22" des Angusskanals 20 bereitgestellten Harzmenge ermöglicht.

### Bezugszeichenliste

- 10: Fertigungsform
- 12: Formkörper
- 14: Formfläche
- 16: Kanal
- 20: Angusskanal
- 22, 22', 22": Abschnitt
- 24, 24', 24": Kanalquerschnitt
- 26, 26', 26": Zulaufanschluss
- 30: Einlegestück
- 40: Faserlagen
- 42, 42', 42": Bereich

## Patentansprüche

1. Verfahren zum Fertigen eines Faserverbundbauteils, insbesondere eines Faserverbundbauteils für ein Rotorblatt einer Windenergieanlage, mit folgenden Verfahrensschritten:
- Einbringen von Fasermaterial (40) für das Faserverbundbauteil in eine Fertigungsform (10),
- Zuführen von fließfähigem Matrixmaterial für das Faserverbundbauteil über einen eine Längserstreckung aufweisenden Angusskanal (20) der Fertigungsform (10) unter Anwendung eines Vakuuminfusionsverfahrens, so dass das Fasermaterial (40) in der Fertigungsform (10) mit quer zur Längserstreckung des Angusskanals (20) fließendem Matrixmaterial aus dem Angusskanal (20) getränkt wird, wobei ein erster Bereich (42, 42', 42") des Fasermaterials (40) im Wesentlichen mit Matrixmaterial aus einem ersten Abschnitt (22, 22', 22") des Angusskanals (20) und ein zweiter Bereich (42, 42', 42") des Fasermaterials (40) im Wesentlichen mit Matrixmaterial aus einem zweiten Abschnitt (22, 22', 22") des Angusskanals (20) getränkt wird,
- Vorgeben einer ersten Matrixmaterialflussrate für den ersten Abschnitt (22, 22', 22") des Angusskanals (20) in Abhängigkeit einer Dicke des Fasermaterials (40) im ersten Bereich (42, 42', 42") sowie Vorgeben einer zweiten Matrixmaterialflussrate für den zweiten Abschnitt (22, 22', 22") des Angusskanals (20) in Abhängigkeit einer Dicke des Fasermaterials (40) im zweiten Bereich (42, 42', 42"), wobei der Angusskanal (20) durch einen Kanal (16) ausgebildet wird, dessen Kanalquerschnitt (24, 24', 24") mittels eines formkomplementären Einlegestücks (30) geändert wird.

2. Verfahren nach Anspruch 1, **dadurch gekennzeichnet, dass** bei einer geringeren Dicke des Fasermaterials (40) eine geringere Matrixmaterialflussrate und bei einer höheren Dicke des Fasermaterials (40) eine höhere Matrixmaterialflussrate vorgegeben wird.

3. Verfahren nach Anspruch 1 oder 2, **dadurch gekennzeichnet, dass** die erste Matrixmaterialflussrate durch eine erste Querschnittsfläche (24, 24', 24", 26, 26', 26") am oder im ersten Abschnitt (22, 22', 22") des Angusskanals (20) vorgegeben ist oder wird und/oder dass die zweite Matrixmaterialflussrate durch eine zweite Querschnittsfläche (24, 24', 24", 26, 26', 26") am oder im zweiten Abschnitt (22, 22', 22") des Angusskanals vorgegeben ist oder wird.

4. Fertigungsform (10) zur Fertigung eines Faserverbundbauteils, insbesondere eines Faserverbundbauteils für ein Rotorblatt einer Windenergieanlage, umfassend einen Angusskanal (20) mit einer Längserstreckung zur Zuführung von fließfähigem Matrixmaterial für das Faserverbundbauteil, wobei Fasermaterial für das Faserverbundbauteil in der Fertigungsform (10) mit quer zu der Längserstreckung des Angusskanals (20) fließendem Matrixmaterial aus dem Angusskanal (20) tränkbar ist, **dadurch gekennzeichnet, dass** der Angusskanal (20) einen ersten Abschnitt (22, 22', 22") mit einer ersten Querschnittsfläche (24, 24', 24", 26, 26', 26") und einen zweiten Abschnitt (22, 22', 22") mit einer zweiten Querschnittsfläche (24, 24', 24", 26, 26', 26") aufweist, wobei der Angusskanal durch einen Kanal ausgebildet wird, dessen Kanalquerschnitt mittels eines formkomplementären Einlegestücks geändert wird.

5. Fertigungsform (10) nach Anspruch 4, **dadurch gekennzeichnet, dass** der Angusskanal (20) wenigstens abschnittsweise entlang seiner Längserstreckung eine im Wesentlichen kontinuierlich variierende Querschnittsfläche (24, 24', 24") aufweist.

6. Fertigungsform (10) nach Anspruch 4 oder 5, **dadurch gekennzeichnet, dass** der Angusskanal (20) wenigstens abschnittsweise mit einer variablen Querschnittsfläche (24, 24', 24", 26, 26', 26") ausgebildet ist.

7. Verwendung einer Fertigungsform (10) nach einem der Ansprüche 4 bis 6 zur Fertigung eines eine Längserstreckung aufweisenden Faserverbundbauteils, wobei das gefertigte Faserverbundbauteil entlang seiner Längserstreckung wenigstens einen ersten Bereich (42, 42', 42") mit einer ersten Dicke und einen zweiten Bereich (42, 42', 42") mit einer zweiten Dicke aufweist.

8. Verwendung nach Anspruch 7, **dadurch gekennzeichnet, dass** eine Fertigungsform (10) verwendet wird, bei der die Längserstreckung des Angusskanals (20) im Wesentlichen parallel zu der Längserstreckung des in der Fertigungsform (10) zu fertigenden Faserverbundbauteils angeordnet ist.

9. Verwendung nach Anspruch 7 oder 8, **dadurch gekennzeichnet, dass** eine Fertigungsform (10) verwendet wird, bei der der erste Abschnitt (22, 22', 22") des Angusskanals (20) in der Nähe des ersten Bereichs (42, 42', 42") des in der Fertigungsform (10) zu fertigenden Faserverbundbauteils und der zweite Abschnitt (22, 22', 22") des Angusskanals (20) in der Nähe des zweiten Bereichs (42, 42', 42") des in der Fertigungsform (10) zu fertigenden Faserverbundbauteils angeordnet ist.

## Claims

1. A method of manufacturing a fibre composite component, in particular a fibre composite component for a rotor blade of a wind energy installation, wherein the method comprises the following process steps:
- introducing a fibre material (40) for the fibre composite component into a manufacturing mould (10),
- supplying a flowable matrix material for the fibre composite component via a runner (20) of the manufacturing mould (10) having an extent in a longitudinal direction, using a vacuum assisted infusion process, so that the fibre material (40) in the manufacturing mould (10) is impregnated with matrix material from the runner (20) flowing transversely to the longitudinal extent of the runner (20), wherein a first region (42, 42', 42") of the fibre material (40) is impregnated substantially with matrix material from a first portion (22, 22', 22") of the runner (20) and a second region (42, 42', 42") of the fibre material (40) is impregnated substantially with matrix material from a second portion (22, 22', 22") of the runner (20),
- specifying a first matrix material flow rate for the first portion (22, 22', 22") of the runner (20) as a function of a thickness of the fibre material (40) in the first region (42, 42', 42"), as well as specifying a second matrix material flow rate for the second portion (22, 22', 22") of the runner (20) as a function of a thickness of the fibre material (40) in the second region (42, 42', 42"), wherein the runner (20) is formed by a channel (16), the channel cross-section (24, 24', 24") of which is changed by means of an insert piece (30) of complementary shape.

2. The method according to claim 1, **characterised in that** a lower matrix material flow rate is specified at a smaller thickness of the fibre material (40) and a higher matrix material flow rate is specified at a greater thickness of the fibre material (40).

3. The method according to claim 1 or 2, **characterised in that** the first matrix material flow rate has been or is specified by means of a first cross-sectional area (24, 24', 24", 26, 26', 26") at or in the first portion (22, 22', 22") of the runner (20) and/or that the second matrix material flow rate has been or is specified by means of a second cross-sectional area (24, 24', 24", 26, 26', 26") at or in the second portion (22, 22', 22") of the runner.

4. A manufacturing mould (10) for manufacturing a fibre composite component, in particular a fibre composite component for a rotor blade of a wind energy installation, comprising a runner (20) having an extent in a longitudinal direction for the supply of a flowable matrix material for the fibre composite component, wherein fibre material for the fibre composite component is able to be impregnated in the manufacturing mould (10) with matrix material from the runner (20) flowing transversely to the longitudinal extent of the runner (20), **characterised in that** said runner (20) comprises a first portion (22, 22', 22") having a first cross-sectional area (24, 24', 24", 26, 26', 26") and a second portion (22, 22', 22") having a second cross-sectional area (24, 24', 24", 26, 26', 26"), wherein the runner is formed by a channel, the channel cross-section of which is changed by means of an insert piece of complementary shape.

5. The manufacturing mould (10) according to claim 4, **characterised in that** the runner (20) has, at least in sections, a cross-sectional area (24, 24', 24") which varies substantially continuously along its longitudinal extent.

6. The manufacturing mould (10) according to claim 4 or 5, **characterised in that** the runner (20) is constructed, at least in sections, with a variable cross-sectional area (24, 24', 24", 26, 26', 26").

7. Use of a manufacturing mould (10) according to any one of the claims 4 to 6 for manufacturing a fibre composite component having a longitudinal extent, wherein the manufactured fibre composite component has, along its longitudinal extent, at least a first region (42, 42', 42") with a first thickness and a second region (42, 42', 42") with a second thickness.

8. The use according to claim 7, **characterised in that** a manufacturing mould (10) is used in which the longitudinal extent of the runner (20) is arranged substantially parallel to the longitudinal extent of the fibre composite component to be manufactured in the manufacturing mould (10).

9. The use according to claim 7 or 8, **characterised in that** a manufacturing mould (10) is used in which the first portion (22, 22', 22") of the runner (20) is arranged in the vicinity of the first region (42, 42', 42") of the fibre composite component to be manufactured in the manufacturing mould (10) and the second portion (22, 22', 22") of the runner (20) is arranged in the vicinity of the second region (42, 42', 42") of the fibre composite component to be manufactured in the manufacturing mould (10).

## Revendications

1. Procédé servant à fabriquer un composant composite à base de fibres, en particulier un composant composite à base de fibres pour une pale de rotor d'une éolienne, avec des étapes de procédé suivantes consistant à :
- introduire du matériau à base de fibres (40) pour le composant composite à base de fibres dans un moule de fabrication (10),
- amener un matériau matriciel pouvant s'écouler pour le composant composite à base de fibres par l'intermédiaire d'un canal de coulée (20), présentant une extension longitudinale, du moule de fabrication (10) en appliquant un procédé d'infusion sous vide de sorte que le matériau à base de fibres (40) soit imprégné dans le moule de fabrication (10) d'un matériau matriciel provenant du canal de coulée (20), s'écoulant de manière transversale par rapport à l'extension longitudinale du canal de coulée (20), dans lequel une première zone (42, 42', 42") du matériau à base de fibres (40) est imprégnée sensiblement du matériau matriciel issu d'un premier tronçon (22, 22', 22") du canal de coulée (20) et une deuxième zone (42, 42', 42") du matériau à base de fibres (40) est imprégnée sensiblement d'un matériau matriciel issu d'un deuxième tronçon (22, 22', 22") du canal de coulée (20),
- spécifier un premier débit de matériau matriciel pour le premier tronçon (22, 22', 22") du canal de coulée (20) en fonction d'une épaisseur du matériau à base de fibres (40) dans la première zone (42, 42', 42") ainsi que spécifier un deuxième débit de matériau matriciel pour le deuxième tronçon (22, 22', 22") du canal de coulée (20) en fonction d'une épaisseur du matériau à base de fibres (40) dans la deuxième zone (42, 42', 42"), dans lequel le canal de coulée (20) est réalisé par un canal (16), dont la section transversale de canal (24, 24', 24") est modifiée au moyen d'une pièce d'insertion (30) à complémentarité de forme.

2. Procédé selon la revendication 1, **caractérisé en ce que** dans le cas d'une épaisseur inférieure du matériau à base de fibres (40), un débit de matériau matriciel inférieur est spécifié et dans le cas d'une épaisseur plus importante du matériau à base de fibres (40), un débit de matériau matriciel plus élevé est spécifié.

3. Procédé selon la revendication 1 ou 2, **caractérisé en ce que** le premier débit de matériau matriciel à travers une première surface de section transversale (24, 24', 24" , 26, 26', 26") est spécifié au niveau du ou dans le premier tronçon (22, 22', 22") du canal de coulée (20), et/ou que le deuxième débit de matériau matriciel à travers une deuxième surface de section transversale (24, 24', 24", 26, 26', 26") est spécifié au niveau de ou dans le deuxième tronçon (22, 22', 22") du canal de coulée.

4. Moule de fabrication (10) servant à fabriquer un composant composite à base de fibres, en particulier un composant composite à base de fibres pour une pale de rotor d'une éolienne, comprenant un canal de coulée (20) avec une extension longitudinale servant à amener un matériau matriciel pouvant s'écouler pour le composant composite à base de fibres, dans lequel un matériau à base de fibres pour le composant composite à base de fibres peut être imprégné dans le moule de fabrication (10) d'un matériau matriciel issu du canal de coulée (20) s'écoulant de manière transversale par rapport à l'extension longitudinale du canal de coulée (20), **caractérisé en ce que** le canal de coulée (20) présente un premier tronçon (22, 22', 22") avec une première surface de section transversale (24, 24', 24", 26, 26', 26") et un deuxième tronçon (22, 22', 22") avec une deuxième surface de section transversale (24, 24', 24", 26, 26', 26"), dans lequel le canal de coulée est réalisé par un canal, dont la section transversale de canal est modifiée au moyen d'une pièce d'insertion à complémentarité de forme.

5. Moule de fabrication (10) selon la revendication 4, **caractérisé en ce que** le canal de coulée (20) présente au moins par endroits, le long de son extension longitudinale, une surface de section transversale (24, 24', 24") variant sensiblement en continu.

6. Moule de fabrication (10) selon la revendication 4 ou 5, **caractérisé en ce que** le canal de coulée (20) est réalisé au moins par endroits avec une surface de section transversale (24, 24', 24", 26, 26', 26") variable.

7. Utilisation d'un moule de fabrication (10) selon l'une quelconque des revendications 4 à 6 servant à fabriquer un composant composite à base de fibres présentant une extension longitudinale, dans lequel le composant composite à base de fibres fabriqué présente, le long de son extension longitudinale, au moins une première zone (42, 42', 42") avec une première épaisseur et une deuxième zone (42, 42', 42") avec une deuxième épaisseur.

8. Utilisation selon la revendication 7, **caractérisée en ce qu'**un moule de fabrication (10) est utilisé, où l'extension longitudinale du canal de coulée (20) est disposée sensiblement de manière parallèle par rapport à l'extension longitudinale du composant composite à base de fibres à fabriquer dans le moule de fabrication (10).

9. Utilisation selon la revendication 7 ou 8, **caractérisée en ce qu'**un moule de fabrication (10) est utilisé, où le premier tronçon (22, 22', 22") du canal de coulée (20) est disposé à proximité de la première zone (42, 42', 42") du composant composite à base de fibres à fabriquer dans le moule de fabrication (10), et le deuxième tronçon (22, 22', 22") du canal de coulée (20) est disposé à proximité de la deuxième zone (42, 42', 42") du composant composite à base de fibres à fabriquer dans le moule de fabrication (10).
